# EUROPÄISCHE PATENTANMELDUNG

(11) **EP 4 507 166 A1**
(43) Veröffentlichungstag der Anmeldung: **12.02.2025**
(21) Anmeldenummer: 24188753.8
(22) Anmeldetag: 16.07.2024
(51) Int. Cl.: H02J 50/10, H02J 50/40, H02J 50/50, A47J 27/00, A47J 36/00, H02J 50/00, H02J 50/80, H02J 7/00

(54) **HAUSHALTGERÄTESYSTEM UND VERFAHREN ZUM BETREIBEN**

(30) Priorität: 09.08.2023 BE 202305670
(71) Anmelder: Miele & Cie. KG, 33332 Gütersloh (DE)
(72) Erfinder: Ennen, Volker, Dr., 32257 Bünde (DE)

(57) **Zusammenfassung**

Haushaltgerätesystem (1) umfassend eine Energiebereitstellungseinrichtung (2), ein erstes und ein zweites Haushaltgerät (3, 4) und eine Steuereinrichtung (5), wobei die Energiebereitstellungseinrichtung (2) eine Induktionsspule (6) zur Bereitstellung wenigstens eines elektromagnetischen Feldes umfasst und wobei das erste Haushaltgerät (3) eine Energieempfangseinrichtung (7) mit einem Spulenelement (8) zur Aufnahme von Energie aus dem von der Induktionsspule (6) bereitgestellten elektromagnetischen Feld umfasst. Dabei umfasst das erste Haushaltgerät (3) ein Energieweitergabeelement (9), mittels dessen Energie an ein von dem zweiten Haushaltgerät (4) umfasstes Energieaufnahmeelement (10) weitergebbar ist. Bei dem Verfahren zum Betreiben eines solchen Haushaltgerätesystems (1) wird mittels des Energieweitergabeelementes (9) des ersten Haushaltgerätes (3) Energie wenigstens auf ein Energieaufnahmeelement (10) eines zweiten und/oder eines weiteren Haushaltgerätes (4, 11) übertragen.

## Beschreibung

Die vorliegende Erfindung betrifft ein Haushaltgerätesystem umfassend wenigstens eine Energiebereitstellungseinrichtung, wenigstens ein erstes und wenigstens ein zweites Haushaltgerät und wenigstens eine Steuereinrichtung. Die Energiebereitstellungseinrichtung umfasst wenigstens eine Induktionsspule zur Bereitstellung wenigstens eines elektromagnetischen Feldes, wobei das erste Haushaltgerät wenigstens eine Energieempfangseinrichtung mit wenigstens einem Spulenelement zur Aufnahme von Energie aus dem von der Induktionsspule bereitgestellten elektromagnetischen Feld umfasst. Die vorliegende Erfindung betrifft zudem ein Verfahren zum Betreiben eines solchen Haushaltgerätesystems.

Verschiedenste Haushaltgeräte unterstützen einen Benutzer bei der Hausarbeit wie z. B. der Zubereitung von Speisen in einer Küche. Dabei können beispielsweise unterschiedliche Geräte direkt bei der Zubereitung eingesetzt werden, z. B. Gargeräte, und andere Haushaltgeräte können auch bei Zwischenschritten in der Zubereitung unterstützen, beispielsweise ein Mixer, eine Waage, ein Wasserkocher und/oder dergleichen.

Problematisch ist jedoch, dass all diese Haushaltshelfer in der Regel Energie benötigen. Kabelgebundene Geräte funktionieren in der Regel zuverlässig. Jedoch ist das Ein- und Ausstecken jedes einzelnen Gerätes nicht besonders komfortabel und die Anzahl an erreichbaren Steckdosen z. B. einer Küchenzeile ist in der Regel zudem auch begrenzt. Weiterhin sind die sichtbaren Kabel optisch nicht ansprechend und man kann durch die Kabel auch gestört bzw. behindert werden.

Manche Geräte gibt es zwar auch beispielsweise mit einem Energiespeicher bzw. mit einem Akku. Nachteilig ist jedoch, dass die Akkus regelmäßig geladen werden müssen und selbst vollgeladen nur eine begrenzte Betriebszeit haben. Hat man ein Gerät nicht ausreichend vor der Benutzung geladen, kann eine Zubereitung nicht wie gewünscht fortgesetzt werden.

Es ist daher die Aufgabe der vorliegenden Erfindung, einem Benutzer die Möglichkeit zu geben, energiebetriebene Haushaltgeräte komfortabler zu nutzen.

Diese Aufgabe wird gelöst durch ein Haushaltgerätesystem mit den Merkmalen des Anspruchs 1 und durch ein Verfahren zum Betreiben eines Haushaltgerätesystems mit den Merkmalen des Anspruchs 16. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Haushaltgerätesystem umfasst wenigstens eine Energiebereitstellungseinrichtung, wenigstens ein erstes Haushaltgerät und wenigstens ein zweites Haushaltgerät. Weiterhin ist wenigstens eine Steuereinrichtung vorgesehen. Die Energiebereitstellungseinrichtung umfasst wenigstens eine Induktionsspule zur Bereitstellung wenigstens eines elektromagnetischen Feldes. Weiterhin umfasst das erste Haushaltgerät wenigstens eine Energieempfangseinrichtung mit wenigstens einem Spulenelement zur Aufnahme von Energie aus dem von der Induktionsspule der Energiebereitstellungseinrichtung bereitgestellten elektromagnetischen Feld. Zudem umfasst das erst. Haushaltgerät wenigstens ein Energieweitergabeelement, mittels dessen Energie an wenigstens ein von dem zweiten Haushaltgerät umfasstes Energieaufnahmeelement weitergebbar ist.

Dabei ist unter einem Haushaltgerät insbesondere eine Einrichtung zur Zubereitung und/oder Bearbeitung von Lebensmitteln zu verstehen. Solche Haushaltgeräte können beispielsweise als Mikrowelle, Dampfgarer, Gareinrichtung, Wasserkocher, Rührgerät, Waffeleisen, Waage, und/oder dergleichen ausgebildet sein.

Bevorzugt ist in wenigstens einem gekoppelten Zustand Energie mittels des Energieweitergabeelementes des ersten Haushaltgerätes an das Energieaufnahmeelement des zweiten Haushaltgerätes weitergebbar. Dabei ist insbesondere die von dem ersten Haushaltgerät mittels der Energieempfangseinrichtung auf aufgenommene Energie wenigstens teilweise mittels des Energieweitergabeelementes weitergebbar.

Bevorzugt stellt die Energiebereitstellungseinrichtung wenigstens eine Aufstellfläche zur Verfügung. So kann beispielsweise die Induktionsspule der Energiebereitstellungseinrichtung unterhalb einer Aufstelleinrichtung wie zum Beispiel einer Arbeitsplatte vorgesehen sein. Je nach Ausgestaltung kann die Aufstellfläche ein separates Bauteil sein oder auch der Energiebereitstellungseinrichtung zugeordnet oder von dieser umfasst sein. Insbesondere kann beispielsweise die Arbeitsplatte einer Küchenzeile, eine Tischplatte, ein Regalbrett, eine Schublade oder auch die Aufstellfläche eines Kochfeldes eine geeignete Aufstellfläche zur Verfügung stellen.

Ein Energieweitergabeelement dient insbesondere zur Weitergabe von Energie an wenigstens ein weiteres Haushaltgerät.

Ein Energieaufnahmeelement dient insbesondere zur Aufnahme von Energie, welche wenigstens von einem Energieweitergabeelement bereitgestellt wird.

Vorzugsweise stellen das Energieweitergabeelement und das Energieaufnahmeelement wenigstens in einem gekoppelten Zustand wenigstens eine Energieübertragungseinrichtung zur Energieübertragung bereit. Ein gekoppelter Zustand ist dabei insbesondere ein Zustand bzw. eine Anordnung von Haushaltgeräten, in welchem wenigstens ein zweites bzw. weiteres Haushaltgerät Energie von dem ersten Haushaltgerät empfangen bzw. aufnehmen kann.

Das erfindungsgemäße Haushaltgerätesystem bietet viele Vorteile. Ein erheblicher Vorteil ist, dass wenigstens zwei Haushaltgeräte insbesondere induktiv von einer Energiebereitstellungseinrichtung mit Energie versorgt werden können, ohne dass dazu separate Stromversorgungen vorgesehen werden müssen, beispielsweise das Verbinden eines Haushaltgerätes mit einer Steckdose.

So ist es insbesondere möglich, dass ein erstes Haushaltgerät in Wirkverbindung zu der Energiebereitstellungseinrichtung gebracht wird, sodass die von der Induktionsspule der Energiebereitstellungseinrichtung zur Verfügung gestellt Energie von der Energieempfangseinrichtung bzw. dem dazugehörigen Spulenelement von dem ersten Haushaltgerät aufgenommen werden kann. Die weitere Stromversorgung zum zweiten Haushaltgerät kann dann über die Energieweitergabe über ein Energieweitergabeelement des ersten Haushaltgeräts und ein Energieaufnahmeelement des 2. Haushaltgeräts zuverlässig erreicht werden. So ist es möglich, dass das erste und das zweite Haushaltgerät mit Energie versorgt werden und diese somit betrieben werden können, ohne dass separate Stecker in eine Steckdose gesteckt werden müssen oder eine andere Stromversorgung vorgesehen werden muss.

Bevorzugt umfasst das zweite Haushaltgerät wenigstens ein Energieweitergabeelement. So wird es möglich, dass auch Energie von dem zweiten Haushaltgerät an ein weiteres Haushaltgerät bzw. eine weitere Energie benötigende Komponente weitergegeben werden kann.

Besonders bevorzugt ist wenigstens ein weiteres Haushaltgerät umfasst, welches wie das zweite Haushaltgerät ausgebildet ist. Dabei umfasst vorzugsweise jedes weitere Haushaltgerät wenigstens ein Energieaufnahmeelement zur Aufnahme von Energie, welche von wenigstens einem Energieweitergabeelement eines anderen Haushaltgeräts bereitgestellt bzw. übertragen wird und/oder wenigstens ein Energieweitergabeelement zur Weitergabe von Energie an ein nächstes bzw. weiteres Haushaltgerät. Je nach Ausgestaltung und Anwendung kann das Energieaufnahmeelement des weiteren Haushaltgerätes auch dazu geeignet und ausgebildet sein, von der Induktionsspule der Energiebereitstellungseinrichtung Energie aufzunehmen.

Insbesondere ist bevorzugt, dass eine beliebige Anordnung von Haushaltsgeräten wie beispielsweise eine gestapelte Anordnung vorgenommen werden kann. Um dies zu erreichen, können das Energieweitergabeelement, die Energieaufnahmeelement und/oder eine Energieempfangseinrichtung entsprechend ausgebildet sein. Insbesondere können die Energieempfangseinrichtung mit wenigstens einer Spule und ein Energieaufnahmeelement durch eine gleiche Baugruppe zur Verfügung gestellt werden bzw. gleich oder ähnlich ausgebildet sein. So können verschiedene Haushaltgeräte besonders platzsparend übereinander bzw. stapelartig angeordnet werden.

In zweckmäßigen Ausgestaltungen umfassen das Energieweitergabeelement und das Energieaufnahmeelement jeweils wenigstens eine Spule zur induktiven Energieübertragung. Dabei werden die einzelnen Baugruppen insbesondere von jeweils wenigstens einer Spule bereitgestellt. Dabei sind insbesondere die Spule des Energieweitergabeelementes und die Spule des Energieaufnahmeelementes dazu geeignet und ausgebildet, so gekoppelt zu werden, dass Energie von dem Energieweitergabeelement auf das Energieaufnahmeelement übertragen werden kann, insbesondere wenn das Energieaufnahmeelement und das Energieweitergabeelement in einem gekoppelten Zustand vorliegen.

In zweckmäßigen Ausführungen umfasst das Energieweitergabeelement und/oder das Energieaufnahmeelement wenigstens ein Kabelelement, mittels welchem wenigstens zwei Haushaltgeräte zur Energieübertragung koppelbar sind. Dabei ist das Kabelelement insbesondere dazu geeignet und ausgebildet, wenigstens zwei Haushaltgeräte, insbesondere wenigstens ein erstes und ein zweites Haushaltgerät und/oder ein zweites und ein weiteres Haushaltgerät und/oder ein erstes und ein weiteres Haushaltgerät so zu koppeln, dass eine insbesondere elektrische Energie zwischen den Haushaltsgeräten übertragbar ist. Dabei eine solche Verkabelung insbesondere so ausgebildet, dass diese bei der Benutzung nicht stört.

Bevorzugt umfasst wenigstens eines der Haushaltgeräte wenigstens eine Kommunikationseinrichtung zur drahtlosen und/oder kabelgebundenen Kommunikation, insbesondere zur Kommunikation mit wenigstens der Steuereinrichtung und/oder einem anderen Haushaltgerät und/oder der Energiebereitstellungseinheit. Vorzugsweise umfasst jedes der Haushaltgeräte eine Kommunikationseinrichtung, insbesondere zur Kommunikation mit wenigstens einem anderen Haushaltgerät und/oder mit der eigenen und/oder je nach Ausgestaltung einer gemeinsamen Steuereinrichtung und/oder der Energiebereitstellungseinheit. Dabei steht die Steuereinrichtung bevorzugt wenigstens zeitweise mit wenigstens einem der Haushaltgeräte und/oder der Energiebereitstellungseinrichtung in drahtloser und/oder kabelgebundener Kommunikationsverbindung, sodass Zustände und/oder Einstellungen der einzelnen Komponenten abgeglichen werden können, um einen sicheren und zuverlässigen Betrieb zu gewährleisten.

Besonders bevorzugt sind die Haushaltgeräte übereinander stapelbar und/oder übereinander anordenbar. Durch eine solche Ausgestaltung kann eine besonders platzsparende Anordnung mehrerer Haushaltgeräte ermöglicht werden. Je nach Anwendung und Ausgestaltung können die einzelnen Haushaltgeräte insgesamt oder auch einzeln nebeneinander und insbesondere in Reihe angeordnet sein.

In zweckmäßigen Ausgestaltungen umfasst wenigstens eines der Haushaltgeräte und/oder wenigstens die Energiebereitstellungseinrichtung wenigstens eine Bedieneinrichtung bzw. ein User-Interface, mittels welcher wenigstens das wenigstens eine Haushaltgerät und insbesondere alle Haushaltgeräte und/oder wenigstens die Energiebereitstellungseinrichtung bedienbar sind. Vorzugsweise umfasst jedes der Haushaltgeräte eine eigene Bedienung bzw. ein eigenes User-Interface. Je nach Ausgestaltung kann die Bedienung auch in einer externen Einrichtung wie beispielsweise eine App ausgelagert sein, zusätzlich oder auch alternativ.

Bevorzugt ist das Energieaufnahmeelement wenigstens eines zweiten und/oder wenigstens eines weiteren Haushaltgerätes dazu geeignet und ausgebildet, Energie von einem Energieweitergabeelement eines benachbarten der Energiebereitstellungseinrichtung näheren Haushaltgerätes aufzunehmen. Dabei wird insbesondere die Energie entlang eines Stapels und/oder einer Reihe von gekoppelten Haushaltgeräten von dem ersten über wenigstens ein zweites an ein oder mehrere weitere Haushaltgeräte weitergeführt.

Bevorzugt ist die Steuereinrichtung dazu geeignet und ausgebildet, wenigstens einen Energiebedarf und/oder wenigstens einen Energieverbrauch wenigstens eines und insbesondere aller gekoppelten Haushaltgeräte zu ermitteln. Dabei sind gekoppelte Haushaltgeräte insbesondere derzeit aktiv gekoppelte Haushaltgeräte, beispielsweise in einem Stapel von Haushaltsgeräten, welche Energie von der Energiebereitstellungseinrichtung direkt oder indirekt empfangen.

Bevorzugt ist die Steuereinrichtung dazu geeignet und ausgebildet, wenigstens einen Energiebedarf und/oder wenigstens einen Energieverbrauch eines Haushaltgerätes und insbesondere aller gekoppelter Haushaltgeräte zu begrenzen, insbesondere so zu begrenzen, dass der gesamte Energiebedarf aller gekoppelten Haushaltsgeräte geringer ist als die zu dem Zeitpunkt der Energiebereitstellungseinrichtung bereitstellbare Leistung. Hierdurch kann der Energiebedarf des vorgeschlagenen Systems reduziert werden.

Bevorzugt ist die Steuereinrichtung dazu geeignet und ausgebildet die von der Energiebereitstellungseinrichtung bereitgestellte Energie wenigstens auf einen vorbestimmten Wert zu begrenzen. Dabei sind solche Grenzwerte insbesondere ein Maximalwert, vorzugsweise der Wert eines maximalen Energiebedarfs eines bzw. vorzugsweise aller gekoppelten Haushaltgeräte.

Bevorzugt ist die Steuereinrichtung dazu geeignet und ausgebildet, von der Energiebereitstellungseinrichtung die Bereitstellung der von dem Haushaltsgerät und insbesondere von allen gekoppelten Haushaltgeräten benötigten Energie anzufordern.

Vorzugsweise umfasst wenigstens eines der Haushaltgeräte wenigstens eine Sensoreinrichtung zur Detektion wenigstens eines anderen koppelbaren Haushaltgerätes. So kann jederzeit festgestellt werden, ob und wie viele Haushaltgeräte mit der Energiebereitstellungseinrichtung und/oder einem anderen Haushaltgerät gekoppelt sind.

Bevorzugt ist wenigstens eines der Haushaltgeräte zur Zubereitung und/oder Bearbeitung von Lebensmitteln bzw. Speisen geeignet ausgebildet. Dabei sind insbesondere alle Haushaltgeräte des Haushaltgerätesystems zur Zubereitung und/oder Bearbeitung von Lebensmitteln vorgesehen.

Bevorzugt ist die Energiebereitstellungseinrichtung von wenigstens einer Kochfeldeinrichtung umfasst. Dabei wird die Energiebereitstellungseinrichtung dann insbesondere von einer Heizeinrichtung einer Kochfeldeinrichtung bereitgestellt, sodass die Energiebereitstellungseinrichtung insbesondere in die Kochfeldeinrichtung integriert ist. So wird es möglich, dass beispielsweise auch ein konventionelles Kochfeld als Energiebereitstellungseinrichtung verwendet werden kann. Dabei muss dann je nach Ausgestaltung und Anwendung die Steuereinrichtung eventuell entsprechend konfiguriert werden.

Das erfindungsgemäße Verfahren eignet sich zum Betreiben eines Haushaltgerätesystems, wie es zuvor beschrieben wurde. Dabei wird mittels des Energieweitergabeelementes des ersten Haushaltgerätes wenigstens zeitweise Energie wenigstens auf ein Energieaufnahmeelement wenigstens eines zweiten und/oder eines weiteren Haushaltgerätes übertragen.

Dabei wird die von dem ersten Haushaltgerät weitergeben Energie insbesondere von der Induktionsspule der Energiebereitstellungeinrichtung auf die Energieempfangseinrichtung des ersten Haushaltgerätes übertragen und von dort aus weitergeleitet.

Auch das erfindungsgemäße Verfahren bietet die Vorteile, wie sie zuvor schon zu dem erfindungsgemäßen Haushaltgerätesystem beschrieben wurden. Insbesondere wird es möglich, ohne das zusätzliche Einstecken von Haushaltsgeräten in eine Steckdose Energie von einem Haushaltgerät auf ein anderes Haushaltgerät zu übertragen, sodass beide Haushaltgeräte durch eine einfache Kopplung mit Energie versorgt werden können.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Haushaltgerätesystems in einer Ansicht von der Seite; und
- Figur 2: eine rein schematische Darstellung eines weiteren Ausführungsbeispiels eines erfindungsgemäßen Haushaltgerätesystems in einer Ansicht von der Seite.

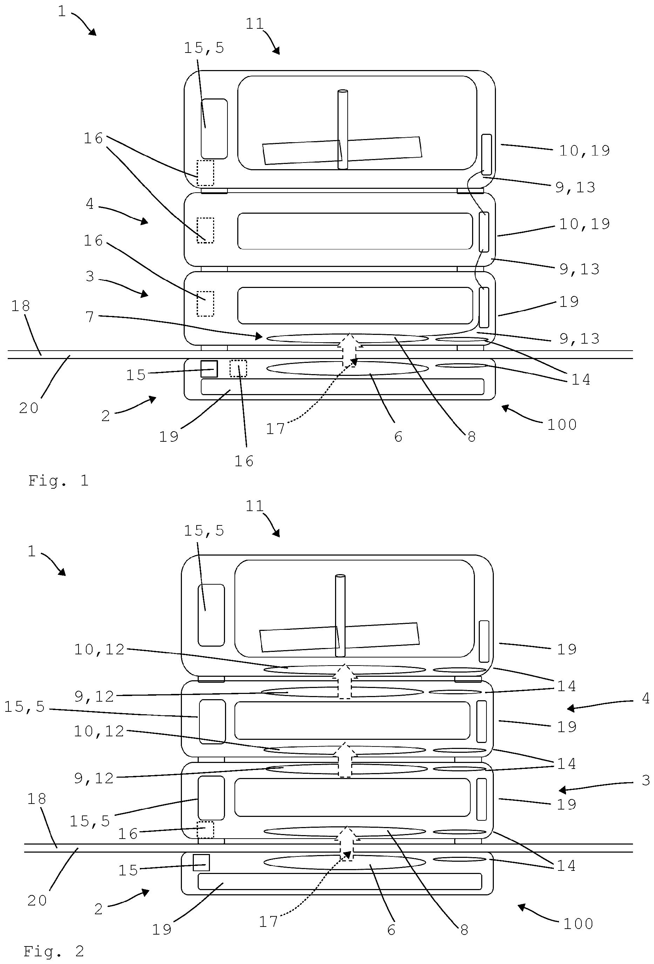

In Figur 1 ist rein schematisch ein erfindungsgemäßes Haushaltgerätesystem 1 in einer geschnittenen Ansicht von der Seite dargestellt. Das hier gezeigte Haushaltgerätesystem 1 umfasst eine Energiebereitstellungseinrichtung 2, welche hier unterhalb einer Aufstellfläche 18 angeordnet ist. Oberhalb der Energiebereitstellungseinrichtung 2 sind auf der Aufstellfläche 18 hier gestapelt mehrere Haushaltgeräte 3, 4, 11 vorgesehen, wobei das unmittelbar auf der Aufstellfläche 18 aufstehende Haushaltgerät 3 ein erstes Haushaltgerät 3 ist, auf dem ein zweites Haushaltgerät 4 positioniert ist, wobei auf dem zweiten Haushaltgerät 4 ein weiteres Haushaltgerät 11 angeordnet ist. Je nach Anwendung und Ausgestaltung können die Haushaltgeräte 3, 4, 11 aber auch ausschließlich oder auch teilweise nebeneinander angeordnet sein.

Die Haushaltgeräte 3, 4, 11 sind dabei in dem hier gezeigten Ausführungsbeispiel alle als Küchengerät ausgebildet, wobei das erste Haushaltgerät 3 und das zweite Haushaltgerät 4 hier schubladenartige Gareinrichtungen sind und wobei das oberste weitere Haushaltgerät 11 hier eine Rühreinrichtung umfasst.

Die Energiebereitstellungseinrichtung 2 umfasst eine Induktionsspule 6, mittels welcher ein elektromagnetisches Feld zur Energieübertragung bzw. zum Übertragen von Energie 17 in Richtung des ersten Haushaltgerätes 3 erzeugt werden kann. So wird es möglich, Energie von unterhalb der Aufstellfläche 18 in Richtung der Haushaltgeräte 3, 4, 11 kontaktlos bzw. induktiv zu übertragen, sodass die Haushaltgeräte 3, 4, 11 in dem hier gezeigten Ausführungsbeispiel mit Energie versorgt werden können, ohne einzelnen in eine Steckdose eingesteckt werden zu müssen.

Damit die von Energiebereitstellungseinrichtung 2 zur Verfügung gestellte Energie bzw. das von der Induktionsspule 6 erzeugte elektrische Feld von dem ersten Haushaltgerät 3 in nutzbare Energie umgewandelt werden kann, umfasst das 1. Haushaltgerät 3 eine Energieempfangseinrichtung 7, welche in dem hier gezeigten Ausführungsbeispiel ein Spulenelement 8 bzw. eine Induktionsspule umfasst, welches das elektromagnetische Feld der Induktionsspule 6 der Energiebereitstellungseinrichtung 2 in Energie umgewandelt wird.

In dem gezeigten Ausführungsbeispiel wird die so empfangene Energie 17 auf eine Elektronikeinheit 19 des ersten Haushaltgerätes 3 überführt, wobei in dem hier gezeigten Ausführungsbeispiel das zweite Haushaltgerät 4 und dass darüber angeordneten weitere Haushaltgerät 11 bzw. deren Elektronikeinheiten 19 mit Kabelelementen 13 verbunden sind.

So kann der hier stapelartig aufgebaute Turm von Haushaltsgeräten 3, 4, 11 komfortabel mit Energie bzw. mit Strom versorgt werden, ohne dass dafür oberhalb der Aufstellfläche 18 Kabel vorgesehen werden müssen, welche einzeln oder auch zusammen in eine Steckdose geführt werden müssen. Ausreichend freie oder erreichbare Steckdosen sind insbesondere in einer Küche bzw. einer Küchenzeile oft nicht verfügbar bzw. die dorthin geführten Kabel können den sonstigen Ablauf in der Küche stören bzw. das Arbeiten auf der Aufstellfläche behindern.

Weiterhin ist gezeigt, dass die Energiebereitstellungseinrichtung 2 in dem hier gezeigten Ausführungsbeispiel durch eine Kochfeldeinrichtung 100 zur Verfügung gestellt wird. Dabei ist hier eine vollintegrierte Kochfeldeinrichtung 100 vorgesehen, bei welcher die Elektronik des Kochfeldes bzw. der Kochfeldeinrichtung 100 unterhalb einer Arbeitsplatte 20 angeordnet ist, welche hier die Aufstellfläche 18 zur Verfügung stellt. Je nach Ausgestaltung kann auch ein anderes Kochfeld als Energiebereitstellungseinrichtung 2 vorgesehen sein, welches beispielsweise in eine Arbeitsplatte 20 eingelassen vorgesehen sind. Zur kontaktlosen Übertragung von Energie sollte es sich jedoch um ein Induktionskochfeld handeln, welches wenigstens eine Induktionsspule 6 umfasst.

In Figur 1 ist weiterhin gezeigt, dass die Elektronikeinheit 19 bei den Haushaltgeräten 3, 4, 11 als Energieaufnahmeelemente 10 fungieren, wobei die Kabelelemente 13 hier Energieweitergabeelemente 9 bereitstellen, sodass Energie von einem Haushaltgerät übertragen werden kann.

Je nach Ausgestaltung kann jedes der Haushaltgeräte 3, 4, 11 eine eigene Steuereinrichtung 5 umfassen, wobei auch die Energiebereitstellungseinrichtung 2 eine Steuereinrichtung 5 aufweisen kann. Je nach Ausgestaltung kann aber auch nur eine Steuereinrichtung 5 für alle Komponenten oder auch mehr als eine Steuereinrichtung 5 für ein oder mehrere Komponenten vorgesehen werden.

Weiterhin ist in Figur 1 dargestellt, dass die Haushaltgeräte 3, 4, 11 Sensoreinrichtungen 16 umfassen können, über welche unter anderem festgestellt werden kann, ob ein weiteres Haushaltgerät in Verbindung mit dem jeweiligen Haushaltgerät steht bzw. ob es gekoppelte Haushaltgeräte 3, 4, 11 in dem hier gezeigten Stapel von Haushaltsgeräten gibt.

In dem gezeigten Ausführungsbeispiel umfasst das weitere Haushaltgerät 11 eine Bedieneinrichtung 15 bzw. ein User-Interface, welches hier in die Steuereinrichtung 5 des Haushaltgerätes 11 integriert ist. Dabei ist hier eine gemeinsame Steuerung bzw. Bedienung der einzelnen Komponenten über das weitere Haushaltgerät 11 vorgesehen. Je nach Ausgestaltung können die Haushaltgeräte 3, 4, 11 aber auch eigene Bedieneinrichtungen 15 aufweisen.

Die einzelnen Haushaltgeräte 3, 4, 11 umfassen in dem hier gezeigten Ausführungsbeispiel jeweils eine Kommunikationseinrichtung 14, welche hier teilweise drahtlos und teilweise drahtgebunden vorgesehen sind. Auch die Energiebereitstellungseinrichtung 2 umfasst eine Kommunikationseinrichtung 14, sodass die einzelnen Haushaltgeräte 3, 4, 11 und die Energiebereitstellungseinrichtung 2 miteinander kommunizieren können. So können z. B. IstWerte und/oder Soll-Werte übertragen bzw. ausgetauscht werden. Insbesondere kann durch Kommunikation der einzelnen Haushaltgeräte 3, 4, 11 und/oder der Energiebereitstellungseinrichtung 2 miteinander ein maximal zur Verfügung gestellter Energiewert ermittelt werden.

In Figur 2 ist ein weiteres Ausführungsbeispiel eines erfindungsgemäßen Haushaltgerätesystems in einer Schnittansicht von der Seite dargestellt.

Auch im gezeigten Ausführungsbeispiel umfasst die Energiebereitstellungseinrichtung 2 eine Induktionsspule 6 zur kontaktlosen Übertragung von Energie 17 durch das Bereitstellen eines elektromagnetischen Feldes.

Wie in dem Ausführungsbeispiel gemäß Figur 1 ist auch hier die Energiebereitstellungseinrichtung 2 als Kochfeldeinrichtung 100 ausgebildet, wobei auch hier ein vollintegriertes Kochfeld 100 vorgesehen ist, welches unter einer Arbeitsplatte 20 bzw. der Aufstellfläche 18 montiert ist.

Im Unterschied zu dem in Figur 1 gezeigten Ausführungsbeispiel umfasst jedes Haushaltgerät 3, 4, 11 hier eine eigene Bedieneinrichtung 15 bzw. ein eigenes User-Interface. Zudem erfolgt die Energieübertragung zwischen den einzelnen Haushaltsgeräten 3, 4, 11 anders als in Figur 1 gezeigten Ausführungsbeispiel kontaktlos bzw. induktiv.

Dazu umfassen die jeweiligen Haushaltgeräte 3, 4, 11 Energieweitergabeelemente 9 und Energieaufnahmeelemente 10, wobei die jeweiligen Energieweitergabeelement 9 und Energieaufnahmeelemente 10 hier durch Spulen 12 bzw. Induktionsspulen bereitgestellt werden. So kann eine besonders komfortabele Übertragung von Energie von einem Haushaltgerät auf das andere erfolgen.

Auch hier umfassen die einzelnen Haushaltgeräte 3, 4, 11 Kommunikationseinrichtungen 14, welche in dem hier gezeigten Ausführungsbeispiel drahtlos vorgesehen sind. Auch die Energiebereitstellung 2 umfasst hier eine Kommunikationseinrichtung 14, sodass die einzelnen Haushaltgeräte 3, 4, 11 und die Energiebereitstellungseinrichtung 2 miteinander kommunizieren können und insbesondere Daten austauschen können, sodass z. B. immer genügend Energie durch die Energiebereitstellungseinrichtung 2 zur Verfügung gestellt wird. Dabei kann insbesondere durch die Kommunikation der einzelnen Haushaltgeräte miteinander ein maximal zur Verfügung gestellte Energiewert ermittelt und an die Energiebereitstellungseinrichtung 2 weitergegeben werden.

### Bezugszeichenliste

- 1: Haushaltgerätesystem
- 2: Energiebereitstellungseinrichtung
- 3: Haushaltgerät
- 4: Haushaltgerät
- 5: Steuereinrichtung
- 6: Induktionsspule
- 7: Energieempfangseinrichtung
- 8: Spulenelement
- 9: Energieweitergabeelement
- 10: Energieaufnahmeelement
- 11: Haushaltgerät
- 12: Spule
- 13: Kabelelement
- 14: Kommunikationseinrichtung
- 15: Bedieneinrichtung
- 16: Sensoreinrichtung
- 17: Energie
- 18: Aufstellfläche
- 19: Elektronikeinheit
- 20: Arbeitsplatte
- 100: Kochfeldeinrichtung

## Patentansprüche

1. Haushaltgerätesystem (1) umfassend wenigstens eine
Energiebereitstellungseinrichtung (2), wenigstens ein erstes und wenigstens ein zweites Haushaltgerät (3, 4) und wenigstens eine Steuereinrichtung (5), wobei die Energiebereitstellungseinrichtung (2) wenigstens eine Induktionsspule (6) zur Bereitstellung wenigstens eines elektromagnetischen Feldes umfasst, wobei das erste Haushaltgerät (3) wenigstens eine Energieempfangseinrichtung (7) mit wenigstens einem Spulenelement (8) zur Aufnahme von Energie aus dem von der Induktionsspule (6) bereitgestellten elektromagnetischen Feld umfasst,
**dadurch gekennzeichnet,**
**dass** das erste Haushaltgerät (3) wenigstens ein Energieweitergabeelement (9) umfasst, mittels dessen Energie an wenigsten ein von dem zweiten Haushaltgerät (4) umfasstes Energieaufnahmeelement (10) weitergebbar ist.

2. Haushaltgerätesystem (1) nach Anspruch 1, **dadurch gekennzeichnet, dass** das zweite Haushaltgerät (4) wenigstens ein Energieweitergabeelement (9) umfasst.

3. Haushaltgerätesystem (1) nach einem der beiden vorhergehenden Ansprüche, **dadurch gekennzeichnet, dass** wenigstens ein weiteres Haushaltgerät (11) umfasst ist, welches wie das zweite Haushaltgerät (4) ausgebildet ist.

4. Haushaltgerätesystem (1) nach einem der vorhergehenden Ansprüche, **dadurch gekennzeichnet, dass** das Energieweitergabeelement (9) und das Energieaufnahmeelement (10) jeweils wenigstens eine Spule (12) zur induktiven Energieübertragung umfassen.

5. Haushaltgerätesystem (1) nach einem der vorhergehenden Ansprüche, **dadurch gekennzeichnet, dass** das Energieweitergabeelement (9) und/oder das Energieaufnahmeelement (10) wenigstens ein Kabelelement (13) umfasst, mittels welchem wenigstens zwei Haushaltgeräte (3, 4, 11) zur Energieübertragung koppelbar sind.

6. Haushaltgerätesystem (1) nach einem der vorhergehenden Ansprüche, **dadurch gekennzeichnet, dass** das Energieweitergabeelement (9) und/oder das Energieaufnahmeelement (10) jeweils einen Kontaktabschnitt aufweisen, mittels welchem wenigstens zwei Haushaltgeräte (3, 4, 11) zur Energieübertragung koppelbar sind.

7. Haushaltgerätesystem (1) nach einem der vorhergehenden Ansprüche, **dadurch gekennzeichnet, dass** wenigstens eines der Haushaltgeräte (3, 4, 11) wenigstens eine Kommunikationseinrichtung (14) zur drahtlosen und/oder kabelgebundenen Kommunikation umfasst, insbesondere zur Kommunikation mit wenigstens der Steuereinrichtung (5) und/oder einem anderen Haushaltgerät (3, 4, 11) und/oder der Energiebereitstellungseinrichtung.

8. Haushaltgerätesystem (1) nach einem der vorhergehenden Ansprüche, **dadurch gekennzeichnet, dass** die Haushaltgeräte (3, 4, 11) übereinander stapelbar und/oder übereinander anordenbar sind.

9. Haushaltgerätesystem (1) nach einem der vorhergehenden Ansprüche, **dadurch gekennzeichnet, dass** wenigstens eines der Haushaltgeräte (3, 4, 11) und/oder wenigstens die Energiebereitstellungseinrichtung (2) wenigstens eine Bedieneinrichtung (15) umfasst, mittels welcher wenigstens das Haushaltgerät (3, 4, 11) bedienbar ist und vorzugsweise alle der Haushaltgeräte (3, 4, 11) bedienbar sind.

10. Haushaltgerätesystem (1) nach einem der vorhergehenden Ansprüche, **dadurch gekennzeichnet, dass** das Energieaufnahmeelement (10) wenigstens eines zweiten und/oder wenigstens eines weiteren Haushaltgerätes (4, 11) dazu geeignet und ausgebildet ist, Energie von einem Energieweitergabeelement (9) eines benachbarten, der Energiebereitstellungseinrichtung (2) näheren Haushaltgerätes (3, 4, 11) aufzunehmen.

11. Haushaltgerätesystem (1) nach einem der vorhergehenden Ansprüche, **dadurch gekennzeichnet, dass** die Steuereinrichtung (5) dazu geeignet und ausgebildet ist, wenigstens einen Energiebedarf und/oder wenigstens einen Energieverbrauch eines Haushaltgerätes (3, 4, 11) und insbesondere aller gekoppelter Haushaltgeräte (3, 4, 11) zu ermitteln.

12. Haushaltgerätesystem (1) nach einem der vorhergehenden Ansprüche, **dadurch gekennzeichnet, dass** die Steuereinrichtung (5) dazu geeignet und ausgebildet ist, wenigstens einen Energiebedarf und/oder wenigstens einen Energieverbrauch eines Haushaltgerätes (3, 4, 11) und insbesondere aller gekoppelter Haushaltgeräte (3, 4, 11) zu begrenzen, insbesondere so zu begrenzen, dass der gesamte Energiebedarf aller gekoppelten Haushaltsgeräte (3,4,11) geringer ist als die zu dem Zeitpunkt der Energiebereitstellungseinrichtung bereitstellbare Leistung.

13. Haushaltgerätesystem (1) nach einem der vorhergehenden Ansprüche, **dadurch gekennzeichnet, dass** die Steuereinrichtung (5) dazu geeignet und ausgebildet ist, die von der Energiebereitstellungseinrichtung (2) bereitgestellte Energie wenigstens auf einen vorbestimmten Grenzwert zu begrenzen und/oder von der Energiebereitstellungseinrichtung die Bereitstellung der von dem Haushaltsgerät (3,4,11) und insbesondere von allen gekoppelten Haushaltgeräten (3, 4, 11) benötigten Energie anzufordern.

14. Haushaltgerätesystem (1) nach einem der vorhergehenden Ansprüche, **dadurch gekennzeichnet, dass** wenigstens eines der Haushaltgeräte (3, 4, 11) wenigstens eine Sensoreinrichtung (16) zur Detektion wenigstens eines anderen koppelbaren Haushaltgerätes (3, 4, 11) umfasst.

15. Haushaltgerätesystem (1) nach einem der vorhergehenden Ansprüche, **dadurch gekennzeichnet, dass** wenigstens eines der Haushaltgeräte (3, 4, 11) zur Zubereitung und/oder Bearbeitung von Lebensmitteln geeignet und ausgebildet ist, insbesondere, dass alle Haushaltgeräte (3, 4, 11) zur Zubereitung und/oder Bearbeitung von Lebensmitteln geeignet und ausgebildet sind.

16. Haushaltgerätesystem (1) nach einem der vorhergehenden Ansprüche, **dadurch gekennzeichnet, dass** die Energiebereitstellungseinrichtung (2) von wenigstens einer Kochfeldeinrichtung (100) umfasst ist.

17. Verfahren zum Betreiben eines Haushaltgerätesystems nach einem der vorhergehenden Ansprüche,
**dadurch gekennzeichnet,**
**dass** mittels des Energieweitergabeelementes (9) des ersten Haushaltgerätes (3) wenigstens zeitweise Energie wenigstens auf ein Energieaufnahmeelement (10) wenigstens eines zweiten und/oder eines weiteren Haushaltgerätes (4, 11) übertragen wird.
